# EUROPEAN PATENT SPECIFICATION

(11) **EP 3 415 879 B1**
(45) Date of publication and mention of the grant of the patent: **24.03.2021**
(21) Application number: 18177153.6
(22) Date of filing: 12.06.2018
(51) Int. Cl.: G01F 23/64, G01F 23/02

(54) **AN OIL-FILLED ELECTRIC TRANSFORMER**
ÖLGEFÜLLTER ELEKTRISCHER TRANSFORMATOR
TRANSFORMATEUR ELECTRIQUE REMPLI D'HUILE

(30) Priority: 16.06.2017 IT 201700067088
(43) Date of publication of application: 19.12.2018
(73) Proprietor: Elettromaule Component S.r.l., 36075 Montecchio Maggiore (VI) (IT)
(72) Inventor: DE PERON, Marco, 36075 Montecchio Maggiore (VI) (IT)
(74) Representative: Trentin, Michele

(56) References cited:
- CN-A- 103 822 691
- JP-U- S6 019 932
- US-A- 5 025 764
- US-A1- 2005 279 317

## Description

### Field of application

The present invention is applicable to the industry of oil-filled electric transformers and refers to the measurement and display of the oil level contained therein.

### State of the art

In the known art there are many industries where it is necessary to indicate the level of a liquid present in a tank. An example is the indication of the engine or brake oil level in a vehicle such as a car, motorcycle or truck.

However, a very particular industry in this sense is the industry of oil-filled electric transformers. For this type of vehicles, checking the oil level contained therein is crucial.

In other application fields, a graduated scale formed on the side walls of the tank is used, and the tank has a sufficient degree of transparency to allow the liquid therein to be identified. In other situations, more simply, an inspection of a rod, entered into the tank and extracted therefrom, is carried out, to check by visually estimating the height of the liquid based on the quantity of rod wetted by it. However, the latter solution, albeit immediate and inexpensive, may prove to be inaccurate and, notably, uncomfortable. It is also closely related to the type of liquids: for dense liquids it works properly, whereas for less dense liquids, such as water, it may be difficult to separate clearly the wet area from the not wet area.

Nonetheless, in the case of an oil-filled electric transformer, it is not possible to inspect the whole tank, since getting closer and touching it is forbidden. Moreover, the tank must be typically hermetically sealed at least during the operating phase, which means that it is not possible to remove rods or anything else.

In this sense, detectors are known that immediately give back visual information. They consist of a cylindrical metal body partially inserted by screwing into the transformer tank containing the oil, whose level must be checked. The end of the cylindrical body inserted into the tank is pierced so as to allow the oil to be checked to get into the cylindrical body and the other end is closed by a transparent element for visual checking. Inside there is generally a float element for making checking easier.

This detector is coupled to the tank by sealing means such as gaskets or other. Likewise, the transparent element is coupled to the cylindrical metal body by means of gaskets and screw seals.

A first drawback of such transformers is that the level indicator is generally made up of a large number of components that are assembled together. This complicates not only its implementation, but also its assembly.

In addition, they must be hermetically sealed. In this sense, among the various components, as said, sealing gaskets or the like must be provided, increasing the implementation complexity, as well as the production costs.

Another drawback is that the cylindrical body is made of metal. This means that, in the case of oil-filled electric transformers, an adequate electrical insulation must be provided to ensure that they do not conduct any electricity which may be found circulating around their position or that they may be traversed by induced currents.

Moreover, in case of breakdown, or even partial breakdown, of the level indicator, should some fragments fall inside the transformer, they must not cause a short circuit or similar dangerous events.

Furthermore, since it is not always possible to guarantee minimum distances from the active parts of the transformer, the electrical insulation of the part intended for indicating the level becomes essential.

Besides, it is often the case that the oil-filled electric transformer is implemented in the open air. In this case, gaskets are more subject to wear due to sunlight, thus compromising the long-term sealing of the indicator.

Furthermore, in such cases, the metal the level indicators are made of is important, too. In fact, if a material which is not anti-corrosive is used, it is necessary to carry out suitable surface treatments to protect them, thus resulting in a significant increase in implementation costs.

Furthermore, the use of seals and gaskets to couple the transparent element to the cylindrical body leads to the formation of gaps (steps or other) upon the outer surface of the indicator and in the visual checking portion. Such gaps can easily host dirt or the like, which, after a short time, impairs the capacity of the level to be inspected. Multiple cleaning operations, which, in the case of oil-filled electric transformers, are problematic due to the aforementioned danger posed by contact with them, are thereby required.

Patent document JP S60 19932 U discloses a prior art level indicator for use on an oil-filled electric transformer.

### Presentation of the invention

The object of the present invention is to overcome, at least partially, the drawbacks highlighted above by providing an oil-filled electric transformers whose portion for indicating the level of the oil contained is easy to implement and low-cost.

Another object is that, in the above-mentioned transformer, the oil level indicator part of the transformer consists of a minimum number of components, which is lower than the number of the parts composing the indicators of known equivalent transformers.

A further object is to provide an oil-filled electric transformer which requires less gaskets or similar needed for its implementation and installation at least for its part intended for indicating the level of the oil in it, in order to ensure that the tank is hermetically sealed even under environmental conditions which are difficult or otherwise able to induce the rapid degradation of gaskets.

Another object is that the level indicator of the transformer may be made with low-cost materials while ensuring a perfect sealing against stress, resistance to weather conditions, UV rays and aggressive atmospheres typical of industrial and seaside areas. At the same time, a reliable level indication must be ensured.

A further object is that the oil level indicator of the transformer does not have, at or near the visual checking portion, gaps, steps, or other, which favour the accumulation of liquid and/or dirt likely to undermine the checking and such that a cleaning operation is required.

Said objects, as well as others which will become clearer below, are achieved by an oil-filled electric transformer according to the following claims, which are to be considered as an integral part of the present patent.

In particular, it comprises at least one oil tank and the transformer itself. The tank has at least one opening in which a liquid level indicator (1) is at least partially inserted.

The latter comprises in turn a hollow body open at a first end for the liquid entry and at the second end for the inspection of the liquid level.

At least one closure element which is at least partially transparent is then permanently applied to the second end to allow such inspection.

According to the invention, the afore-mentioned permanent coupling is achieved by irreversible gripping means between the closure element and the hollow body.

In other words, the coupling between the two elements is not achieved by mechanical interference, nor by screwing (reversible couplings). This makes it possible, advantageously, to avoid the use of gaskets, which not only increase the number of pieces to be used, but also decrease the long-term resistance of the transformer.

Typically, irreversible gripping means consist of welding or gluing, being thus systems suitable for ensuring that the transformer is hermetically sealed with no need of using any gasket.

As a result, advantageously, the implementation of the transformer of the invention is easier and its costs are reduced.

According to the invention, the second end of the hollow body is shaped so as to accommodate the closure element so that the level indicator of the transformer has a smooth outer surface at their merging area.

The use of welds or glues makes it possible to achieve this feature, which in turn offers the advantage to eliminate liquid and/or dirt accumulation points likely to impair, even partially, the visual checking of the level. This also makes it possible to avoid cleaning operations for removing dirt or liquids which would require the machine to be stopped because of the danger posed by a possible contact between the operator and the oil-filled electric transformer.

### Brief Description of the Drawings

Further features and advantages of the invention will be more evident in light of the detailed description of a preferred but not exclusive embodiment of an oil-filled electric transformer according to the invention, illustrated by way of non-limiting example with the aid of the accompanying drawings, wherein:
- FIG. 1 represents an oil-filled electric transformer according to the invention in axonometric partially exploded view;
- FIG. 2 represents a detail of the transformer in FIG. 1.

### Detailed description of some preferred exemplary embodiments

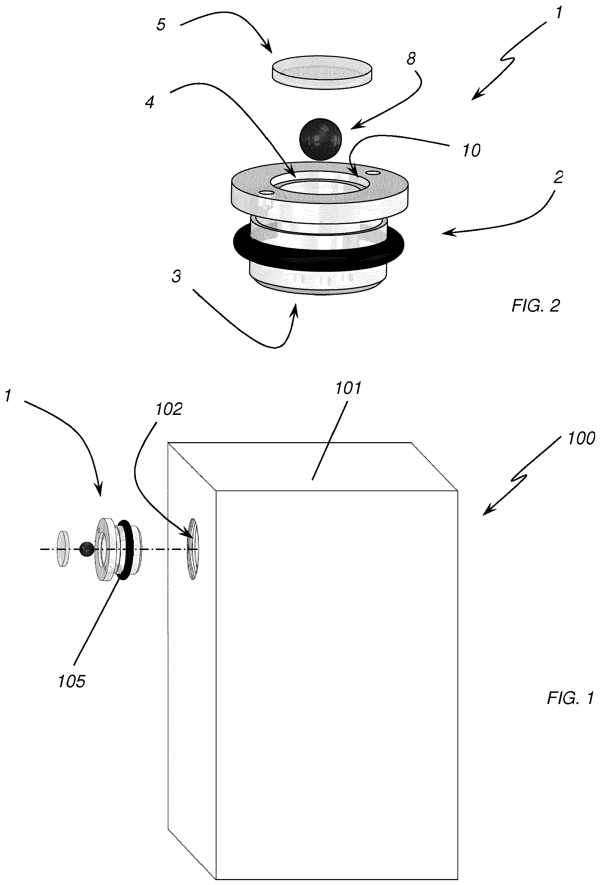

With reference to the above-mentioned figures, and in particular to fig. 1, described herein is an oil-filled electric transformer **100.** It comprises a tank **101** within which the oil-immersed electric transformer is housed.

As can be seen in the figure, it also comprises an opening **102** formed on the tank **101** in which a level indicator **1** is partially inserted. To ensure the hydraulic sealing of the coupling between the tank **101** and the level indicator **1,** between the opening **102** and the level indicator **1** a gasket **105** is typically interposed.

According to one aspect of the invention, the oil level indicator **1** comprises firstly a hollow body **2** open at a first end **3** for the oil entry and at the second extremities **4** for the level inspection of its level.

In the embodiment described herein, the hollow body **2** is made of plastic material and, notably, of nylon. However, such detail must not be considered as limiting for the invention. Nevertheless, it should be noted that this choice allows to decrease the cost for implementing the level indicator **1** of the invention compared to the known equivalent indicators, while ensuring the same operational quality. It is also optimal for the electrical and magnetic issues of an oil-filled electric transformer **100.**

According to another aspect of the invention, the level indicator **1** also includes a closure element **5** of the second end **4** of the hollow body **2.** This closure element **5** is transparent and permanently coupled to the hollow body **4** in order to ensure its hydraulic sealing.

The operator can thus visually check the level of the liquid and the latter cannot leak out through the indicator itself.

However, typically within the hollow body **2** there is also provided room for a float element **8** shaped to come into contact with the liquid so as to make the level checking easier. In the figure, it is observed that one float element is provided, having a substantially spherical shape, but this aspect, too, must not be considered as limiting for different embodiments of the invention in which there is no float element, in which there are more float elements and/or in which the floats have different shape.

With regard to the closure element **5,** according to the embodiment described herein, it is made of transparent plastic material. However, this is not to be considered as limiting for different embodiments of the invention according to which the materials used are different. The number of closure elements and their transparency are non-limiting features for the invention as well. As regards transparency, in fact, it may be even partial, provided that it allows a proper visual evaluation of the oil level.

According to another aspect of the invention, the level indicator 1 further comprises irreversible gripping means for the coupling between the closure element **5** and the hollow body **2.**

Therefore, all means that involve reversible mechanical interference, such as screw-type or contrast means, are advantageously replaced. They, actually, require the use of gaskets to ensure that the closure is hermetically sealed, as well as reversible. In the case of the invention, instead, such hermetic sealing is advantageously obtained by the gripping means, making it possible to avoid the use of gaskets.

As a result, the level indicator **1** of the transformer **100** of the invention ensures a longer lifetime than the known equivalent oil-filled electric transformers, even under harsh environmental conditions and continuous exposure to sunlight.

Still advantageously, the number of components it consists of is thus reduced, which decreases its production costs and the assembly difficulty.

Typically, the irreversible gripping means are the weld between the closure element **5** and the hollow body **2.** However, according to some alternative embodiments, these gripping means consist of a glue.

Therefore, advantageously, it is observed that these irreversible gripping means, as said above, allow the hermetic sealing with no need of using gaskets. Furthermore, their application turns out to be simple and low cost, advantageously for the implementation phase of the level indicator **1** of the invention.

Moreover, it is apparent that the implementation of the hollow body **2** and of the closure element **5** with plastic material makes the use of such gripping means (both the weld and the glue) easier, resulting in a further profit from the economic point of view and in terms of easiness of implementation of the level indicator **1** of the invention.

According to another aspect of the invention, the second end **4** of the hollow body **2** is shaped to accommodate the closure element **5** so that the level indicator **1** of the transformer has a smooth outer surface at their merging area.

Notably, in figures it is observed that on the second end **4** of the hollow body **2** there is provided a groove **10** which is calibrated so as to accommodate the closure element **5,** but this detail, too, must not be considered as limiting for the invention.

Advantageously, this makes it possible to eliminate liquid and/or dirt accumulation points of likely to impair, even partially, the visual checking of the level. Such feature is obviously particularly relevant in case of use in harsh environments such as those that characterize the oil-filled electric transformer **100** of the invention.

Moreover, it is observed that level indicator **1** of the oil-filled electric transformer **100** of the invention is particularly advantageous since oil-filled electric transformers typically work in harsh environmental conditions and outdoors. The absence of surface gaps in the level indicator **1** at the merging area between the closure element **5** and the hollow body **2** allows to avoid cleaning operations for removing dirt or liquids which, in this specific case, would require the machine to be stopped because of the danger posed by a possible contact between the operator and the oil-filled electric transformer **100.**

In light of the foregoing, it is understood that the oil-filled electric transformer of the invention achieves all the prefixed purposes.

Notably, it is easier to implement and its oil level indicator is cheaper than the indicators of known equivalent transformers.

The number of components the indicator consists of, notably, is lower than the indicators of known equivalent transformers.

Moreover, there are no gaskets, which are usually used in the level indicators of known equivalent transformers to ensure that the coupling between the hollow body and the closure element is hermetically sealed.

Ultimately, the indicator is made with low-cost materials and still is able to ensure a perfect sealing against stress, resistance to weather conditions, UV rays and aggressive atmospheres typical of the industrial environments where oil-filled electric transformers are used.

The advantage of not having, at or near the visual checking portion, any gap, step, or other, which favour the accumulation of liquid and/or dirt likely to undermine the checking and such that a cleaning operation is required is crucial for the indication of the oil level in an oil-filled electric transformer wherein such cleaning operations are dangerous and, therefore, require the machine to be stopped.

Moreover, all the details may furthermore be replaced by other technically equivalent elements, and the materials may be different depending on the needs, without departing from the scope of protection of the invention defined by the appended claims.

## Claims

1. Oil-filled electric transformer comprising at least one tank (**101**) for at least said oil and at least said transformer, provided with at least one opening (**102**) wherein it is at least partially inserted a liquid level indicator (**1**) comprising:
- a hollow body (**2**) open at a first end (**3**) for the liquid entry and at a second end (**4**) for the inspection of the liquid level;
- at least one closure element (**5**) of said second end (**4**) of said hollow body (**2**) at least partially transparent and stably coupled to said hollow body (**2**);
**characterized by**:
- said hollow body (2) being coupled to said opening (102) of said tank (101),
- irreversible gripping means for the coupling between said closure element (**5**) and said hollow body (**2**),
said second end (**4**) of said hollow body (**2**) being shaped to accommodate said closure element (**5**) so that said level indicator (**1**) has a substantially smooth outer surface at the merging area of said closure element (**5**) with said hollow body (**2**).

2. Oil-filled electric transformer according to claim 1, **characterized in** comprising at least one float element (**5**) inserted within said hollow body (**2**) and shaped to come into contact, at least partially, with the liquid so as to indicate its level.

3. Oil-filled electric transformer according to any of the preceding claims, **characterized in that** said hollow body (2) is made of plastic material.

4. Oil-filled electric transformer according to claim 3, **characterized in that** said plastic material is nylon.

5. Oil-filled electric transformer according to any of the preceding claims, **characterized in that** said closure element (**5**) is made of at least partially transparent plastic material.

6. Oil-filled electric transformer according to any of the preceding claims, **characterized in that** said irreversible gripping means are a glue.

7. Oil-filled electric transformer according to any of the claims 1 to 5, **characterized in that** said irreversible gripping means are a weld.

## Patentansprüche

1. Mit Öl gefüllter elektrischer Transformator, umfassend mindestens einen Tank (101) für mindestens das Öl und mindestens den Transformator, der mit mindestens einer Öffnung (102) vorgesehen ist, wobei zumindest teilweise ein Flüssigkeitsfüllstandanzeiger (1) eingesetzt ist, **dadurch gekennzeichnet, dass** er umfasst:
- einen hohlen Körper (2), der an einem ersten Ende (3) für einen Flüssigkeitseintritt und an einem zweiten Ende (4) für die Inspektion des Flüssigkeitsfüllstands offen ist, wobei der hohle Körper (2) mit der Öffnung (102) des Tanks (101) gekoppelt ist;
- mindestens ein Verschlusselement (5) des zweiten Endes (4) des hohlen Körpers (2), das zumindest teilweise transparent und mit dem hohlen Körper (2) stabil gekoppelt ist;
- irreversible Greifmittel für die Kopplung zwischen dem Verschlusselement (5) und dem hohlen Körper (2),
wobei das zweite Ende (4) des hohlen Körpers (2) geformt ist, um das Verschlusselement (5) unterzubringen, sodass der Füllstandanzeiger (1) eine im Wesentlichen glatte äußere Fläche an dem Zusammenführungsbereich des Verschlusselements (5) mit dem hohlen Körper (2) aufweist.

2. Mit Öl gefüllter elektrischer Transformator nach Anspruch 1, **dadurch gekennzeichnet, dass** er mindestens ein Schwimmerelement (5) umfasst, das in den hohlen Körper (2) eingesetzt und geformt ist, um zumindest teilweise mit der Flüssigkeit in Kontakt zu kommen, um ihren Füllstand anzuzeigen.

3. Mit Öl gefüllter elektrischer Transformator nach einem der vorhergehenden Ansprüche, **dadurch gekennzeichnet, dass** der hohle Körper (2) aus einem Kunststoffmaterial hergestellt ist.

4. Mit Öl gefüllter elektrischer Transformator nach Anspruch 4, **dadurch gekennzeichnet, dass** das Kunststoffmaterial Nylon ist.

5. Mit Öl gefüllter elektrischer Transformator nach einem der vorhergehenden Ansprüche, **dadurch gekennzeichnet, dass** das Verschlusselement (5) aus einem zumindest teilweise transparenten Kunststoffmaterial hergestellt ist.

6. Mit Öl gefüllter elektrischer Transformator nach einem der vorhergehenden Ansprüche, **dadurch gekennzeichnet, dass** die irreversiblen Greifmittel ein Klebstoff sind.

7. Mit Öl gefüllter elektrischer Transformator nach einem der Ansprüche 1 bis 5, **dadurch gekennzeichnet, dass** die irreversiblen Greifmittel eine Schweißnaht sind.

## Revendications

1. Transformateur électrique à bain d'huile comprenant au moins un réservoir (**101**) pour au moins ladite huile et au moins ledit transformateur, pourvu d'au moins une ouverture **(102)** dans laquelle un indicateur de niveau de liquide (**1**) est inséré au moins partiellement, comprenant :
- un corps creux (**2**) ouvert à une première extrémité (**3**) pour l'entrée du liquide et à une seconde extrémité (**4**) pour l'inspection du niveau de liquide ;
- au moins un élément de fermeture (**5**) de ladite seconde extrémité (**4**) dudit corps creux (**2**) au moins partiellement transparent et couplé de manière stable audit corps creux (**2**) ;
**caractérisé par** :
- ledit corps creux (2) étant couplé à ladite ouverture (102) dudit réservoir (101),
- un moyen de serrage irréversible pour le couplage entre ledit élément de fermeture (**5**) et ledit corps creux (**2**),
ladite seconde extrémité (**4**) dudit corps creux (**2**) étant formée pour recevoir ledit élément de fermeture (**5**) de façon que ledit indicateur de niveau (**1**) ait une surface extérieure sensiblement lisse au niveau de la zone de jonction dudit élément de fermeture (**5**) avec ledit corps creux (**2**).

2. Transformateur électrique à bain d'huile selon la revendication 1, **caractérisé en ce qu'**il comprend au moins un élément flottant (**5**) inséré à l'intérieur dudit corps creux (**2**) et formé pour entrer en contact, au moins partiellement, avec le liquide de façon à indiquer son niveau.

3. Transformateur électrique à bain d'huile selon l'une quelconque des revendications précédentes, **caractérisé en ce que** ledit corps creux (**2**) est réalisé en un matériau plastique.

4. Transformateur électrique à bain d'huile selon la revendication 3, **caractérisé en ce que** ledit matériau plastique est le nylon.

5. Transformateur électrique à bain d'huile selon l'une quelconque des revendications précédentes, **caractérisé en ce que** ledit élément de fermeture (**5**) est réalisé en un matériau plastique au moins partiellement transparent.

6. Transformateur électrique à bain d'huile selon l'une quelconque des revendications précédentes, **caractérisé en ce que** ledit moyen de serrage irréversible est une colle.

7. Transformateur électrique à bain d'huile selon l'une quelconque des revendications 1 à 5, **caractérisé en ce que** ledit moyen de serrage irréversible est une soudure.
